# EUROPÄISCHE PATENTANMELDUNG

(11) **EP 4 800 870 A1**
(43) Veröffentlichungstag der Anmeldung: **02.09.2026**
(21) Anmeldenummer: 25160285.0
(22) Anmeldetag: 26.02.2025
(51) Int. Cl.: H02J 3/38, H02J 7/35

(54) **ELEKTRISCHES SYSTEM ZUR VERBINDUNG ZUMINDEST EINES PHOTOVOLTAIKMODULS MIT EINEM ENERGIEVERSORGUNGSNETZ**

(71) Anmelder: FRONIUS INTERNATIONAL GmbH, 4643 Pettenbach (AT)
(72) Erfinder: HUEMER, Bernhard, 4643 Pettenbach (AT); LECHER, Roland, 4643 Pettenbach (AT)
(74) Vertreter: SONN Patentanwälte GmbH & Co KG

(57) **Zusammenfassung**

Elektrisches System (1) zur Verbindung zumindest eines Photovoltaikmoduls (9) mit einem Energieversorgungsnetz (7), aufweisend:
einen Wechselrichter (2) mit einer Steuerungseinrichtung (11), einer Gleichspannungsseite (5) und einer Wechselspannungsseite (6); und
einen Gleichspannungsschalter (3) zur elektrischen Verbindung des zumindest einen Photovoltaikmoduls (9) mit dem Wechselrichter (2), wobei der Gleichspannungsschalter (3) über eine elektrische Verbindungsleitung (4) mit der Gleichspannungsseite (5) des Wechselrichters (2) elektrisch verbunden ist,
wobei der Wechselrichter (2) über eine Ansteuerungsverbindung (10) mit dem Gleichspannungsschalter (3) verbunden und die Steuerungseinrichtung (11) dazu eingerichtet ist, den Gleichspannungsschalter (3) über die Ansteuerungsverbindung zwischen einer Schließstellung, in welcher elektrische Energie (E) zwischen dem Wechselrichter (2) und dem zumindest einen Photovoltaikmodul (9) übertragbar ist, und einer Offenstellung, in welcher der Wechselrichter (2) von dem zumindest einen Photovoltaikmodul (9) elektrisch getrennt ist, zu schalten.

## Beschreibung

Die Erfindung betrifft ein elektrisches System zur Verbindung zumindest eines Photovoltaikmoduls mit einem Energieversorgungsnetz, aufweisend:
einen Wechselrichter mit einer Steuerungseinrichtung, einer Gleichspannungsseite und einer Wechselspannungsseite; und
einen Gleichspannungsschalter zur elektrischen Verbindung des zumindest einen Photovoltaikmoduls mit dem Wechselrichter, wobei der Gleichspannungsschalter über eine elektrische Verbindungsleitung mit der Gleichspannungsseite des Wechselrichters elektrisch verbunden ist.

Des Weiteren betrifft die Erfindung ein Verfahren zum Betreiben eines solchen elektrischen Systems zur Verbindung zumindest eines Photovoltaikmoduls mit einem Energieversorgungsnetz.

Wechselrichter werden unter anderem dazu eingesetzt, die von Photovoltaikmodulen erzeugten Gleichspannungen und Gleichströme in Wechselspannungen und Wechselströme umzuwandeln, sodass die umgesetzte elektrische Energie in ein Energieversorgungsnetz eingespeist werden kann. Bei dem Energieversorgungsnetz kann es sich beispielsweise um ein lokales Energieversorgungsnetz eines Netzbetreibers oder um ein Energieversorgungsnetz eines Gebäudes handeln.

Da bei Photovoltaikanlagen hohe elektrische Spannungen auftreten können, müssen entsprechende Sicherheitsvorkehrungen getroffen werden, um im Fehlerfall Schäden zu vermeiden und anwesende Personen zu schützen. Insbesondere im Brandfall muss eine rasche und sichere elektrische Trennung der Photovoltaikmodule vom Energieversorgungsnetz bzw. von einem Wechselrichter möglich sein, weshalb Gleichspannungsschalter, auch DC-Schalter genannt, zwischen Wechselrichtern und Photovoltaikmodulen eingesetzt werden. Vor dem Löschen oder dem Betreten von in Brand geratenen Dächern, auf denen sich Photovoltaikmodule befinden, können Einsatzkräfte die Gleichspannungsschalter manuell betätigen, um die vorhandenen Photovoltaikmodule vom Energieversorgungsnetz zu trennen, sodass weitere Schäden vermieden und die Gefahr von Stromunfällen reduziert werden kann. Die Gleichspannungsschalter werden aber auch dazu eingesetzt, Wechselrichter vor der Abnahme oder der geplanten Inbetriebnahme einer Photovoltaikanlage sicher von den Photovoltaikmodulen zu trennen.

Aus dem Stand der Technik sind Gleichspannungsschalter beispielsweise aus WO 2018/085873 A1. Die offenbarten Gleichspannungsschalter können händisch geschaltet werden, um insbesondere in Gefahrensituationen Photovoltaikmodule von einem Energieversorgungsnetz zu trennen.

Daneben sind Gleichspannungsschalter bekannt, die aus der Ferne betätigt werden können. Ein solcher Gleichspannungsschalter ist beispielsweise aus DE 10 2005 018 173 B4 bekannt. Des Weiteren offenbart DE 20 2012 000 324 U1 einen Gleichspannungsschalter, der mittels eines in eine unterbrechungsfreie Stromversorgung integrierten Fernschalters geschaltet werden kann. Zum Öffnen oder Schließen des Gleichspannungsschalters kann ein Motorantrieb vorgesehen sein. Ein Alarm-Modul kann den Fernschalter ansteuern. Des Weiteren können Brand-, Rauch- und/oder Wassermelder den Gleichspannungsschalter fernauslösen.

Bei manuell zu betätigenden Gleichspannungsschaltern liegt jedoch der Nachteil vor, dass Fehlerfälle zunächst von anwesenden Personen erkannt und anschließend die Schalter händisch betätigt werden müssen. Auch bei Gleichspannungsschaltern, die aus der Ferne betätigt werden, müssen Fehler zunächst von einer unabhängigen, in der Regel örtlich entfernten Einrichtung erkannt oder an diese gemeldet werden, bevor eine Betätigung des Gleichspannungsschalters erfolgen kann. Sowohl die manuell zu betätigenden Gleichspannungsschalter, als auch die fernbetätigbaren Gleichspannungsschaltern haben somit den Nachteil, dass nicht alle Fehlerfälle zuverlässig erkannt und nur eine verzögerte Betätigung des Gleichspannungsschalters erfolgen kann, da manche Fehler erst zeitverzögert detektiert oder gemeldet werden. Insbesondere elektrische Fehlerzustände in Zusammenhang mit den Photovoltaikmodulen oder den Wechselrichtern können bei den bekannten Gleichspannungsschaltern aus dem Stand der Technik und den damit verbundenen Auslösesystemen nicht oder nur verspätet erkannt werden.

Im Lichte dieser Ausführungen ist es Aufgabe der vorliegenden Erfindung, die Nachteile des Standes der Technik zumindest teilweise zu lindern oder gar gänzlich zu beseitigen. Vorzugsweise ist es Aufgabe der vorliegenden Erfindung, ein elektrisches System der eingangs erwähnten Art zur Verfügung zu stellen, bei dem technische Fehlerfälle rasch und zuverlässig erkannt und eine unverzügliche Betätigung des Gleichspannungsschalters ermöglicht wird, um das Risiko von Schäden an Photovoltaikanlagen und Gebäuden sowie die Gefahr für anwesende Personen zu reduzieren.

Gelöst wird diese Aufgabe durch ein elektrisches System zur Verbindung zumindest eines Photovoltaikmoduls mit einem Energieversorgungsnetz nach Anspruch 1 sowie durch ein Verfahren nach Anspruch 11.

Erfindungsgemäß ist bei einem elektrischen System der eingangs erwähnten Art vorgesehen, dass der Wechselrichter über eine Ansteuerungsverbindung mit dem Gleichspannungsschalter verbunden und die Steuerungseinrichtung dazu eingerichtet ist, den Gleichspannungsschalter über die Ansteuerungsverbindung zwischen einer Schließstellung, in welcher elektrische Energie zwischen dem Wechselrichter und dem zumindest einen Photovoltaikmodul übertragbar ist, und einer Offenstellung, in welcher der Wechselrichter von dem zumindest einen Photovoltaikmodul elektrisch getrennt ist, zu schalten. Durch die Verbindung des Wechselrichters mit dem Gleichspannungsschalters über die Ansteuerungsverbindung wird eine direkte und unverzügliche Betätigung des Gleichspannungsschalters ermöglicht, nachdem ein Fehlerzustand von dem Wechselrichter erkannt wurde. Vorteilhafterweise können Fehlerzustände im elektrischen System, wie etwa Überbelastungen, elektrische Fehler innerhalb des Wechselrichters, insbesondere eines Zwischenkreises des Wechselrichters, oder Reverse-Current-Situationen, von dem Wechselrichter erkannt und der Gleichspannungsschalter in der Folge angesteuert werden. Zudem ist es möglich, bei einem Rapid Shutdown den Wechselrichter von dem zumindest einen Photovoltaikmodul zu trennen. Bei einem Rapid Shutdown wird der Betrieb des Wechselrichters umgehend gestoppt, beispielsweise durch ein externes Signal. Da allfällig Energiespeicherelemente, wie etwa Kapazitäten oder Induktivitäten, weiterhin geladen sein und somit eine Gefahr darstellen können, kann der Gleichspannungsschalter in die Offenstellung geschaltet werden, um angeschlossene Einrichtungen spannungsfrei zu schalten. Aufgrund der möglichen Trennung des zumindest einen Photovoltaikmoduls und den Wechselrichter durch den Gleichspannungsschalter kann bei einem Rapid Shutdown auf eine Entladeschaltung, wie sie aus dem Stand der Technik bekannt ist, verzichtet werden. Bei dem Wechselrichter kann es sich insbesondere um einen dreiphasigen Wechselrichter handeln, welcher zur Erzeugung von drei zueinander um vorzugsweise 120° zueinander phasenversetzte Wechselspannungen eingerichtet ist. Die Wechselspannungen können durch Ansteuern und Schalten von elektrischen Schaltern, beispielsweise IGBTs (Englisch: Insulated-Gate Bipolar Transistor), erzeugt werden. Das zumindest eine Photovoltaikmodul kann über den Gleichspannungsschalter an der Gleichspannungsseite des Wechselrichters angeschlossen sein. Zu diesem Zweck weist der Wechselrichter an der Gleichspannungsseite zumindest zwei Wechselrichter-Eingangskontakte auf. Zur Ausgabe der Wechselspannungen kann der Wechselrichter zumindest drei Wechselrichter-Ausgangskontakte zur Ausgabe von Wechselspannungen an der Wechselspannungsseite aufweisen. Der Wechselrichter kann auch einen Hochsetzsteller und/oder einen Spannungszwischenkreis aufweisen. In den Spannungszwischenkreis kann zur Zwischenspeicherung elektrischer Energie ein Zwischenkreiskondensator eingefügt sein. Der Wechselrichter kann als uni- oder bidirektionaler Wechselrichter ausgebildet sein. Der Gleichspannungsschalter weist bevorzugt ein Rastwerk und zumindest ein mit dem Rastwerk verbundenes Schaltmodul auf. Bevorzugt sind mehrere vorzugsweise gleichartige und insbesondere mechanisch in Serie geschaltete Schaltmodule vorgesehen. Das Rastwerk kann das zumindest eine Schaltmodul betätigen, also zwischen einer Einschaltstellung und einer Ausschaltstellung umschalten. Das zumindest eine Schaltmodul kann zumindest einen ersten feststehenden Kontakt, zumindest einen zweiten feststehenden Kontakt sowie zumindest einen beweglichen, insbesondere drehbaren, Kontakt aufweisen. Der bewegliche Kontakt kann in einer Einschaltstellung des Schaltmoduls - der Schließstellung des Gleichspannungsschalters - sowohl den ersten feststehenden Kontakt, also auch den zweiten feststehenden Kontakt elektrisch kontaktieren, um eine Übertragung elektrischer Energie zwischen dem ersten und dem zweiten feststehenden Kontakt zu ermöglichen. In der Ausschaltstellung des Schaltmoduls - der Offenstellung des Gleichspannungsschalters - ist der bewegliche Kontakt mit dem ersten und/oder zweiten feststehenden Kontakt nicht in Kontakt, sodass der erste und der zweite feststehende Kontakt elektrisch voneinander getrennt sind. Der bewegliche Kontakt ist vorzugweise drehbar angeordnet. Beispielsweise kann der bewegliche Kontakt an einer rotierbaren Drehscheibe angeordnet sein. Bei einer Ausführungsform ist der bewegliche Kontakt länglich ausgebildet und weist zwei gegenüberliegende Enden zur Kontaktierung des ersten und des zweiten feststehenden Kontakts auf. Die Enden können zur Kontaktierung und teilweisen Aufnahme der ersten und zweiten feststehenden Kontakte Klammerelemente aufweisen, die jeweils einen Aufnahmebereich für die feststehenden Kontakte bilden. Der erste feststehende Kontakt kann über die elektrische Verbindungsleitung mit dem Wechselrichter verbunden werden. Der zweite feststehende Kontakt kann über eine weitere elektrische Verbindungsleitung mit zumindest einem Photovoltaikmodul verbunden werden. Die elektrische Verbindungsleitung zwischen dem Gleichspannungsschalter und dem Wechselrichter kann durch zumindest ein Verbindungskabel gebildet sein. Auch die weitere elektrische Verbindungsleitung kann durch ein Verbindungskabel gebildet sein. Die Ansteuerungsverbindung ist bevorzugt durch eine verdrahtete elektrische Verbindung gebildet. Alternativ ist jedoch möglich, dass die Ansteuerungsverbindung durch eine Funkverbindung gebildet ist. Die Steuerungseinrichtung des Wechselrichters kann einen oder mehrere Mikroprozessoren und/oder Microcontroller aufweisen. Um den Gleichspannungsschalter, der auch als DC-Schalter bezeichnet werden kann (Englisch: Direct Current), zu schalten, kann die Steuerungseinrichtung Steuersignale über die Ansteuerungsverbindung an den Gleichspannungsschalter übertragen. Der Gleichspannungsschalter, insbesondere ein Antriebsmotor des Gleichspannungsschalters, kann, wenn die Ansteuerungsverbindung verdrahtet ist, über die Ansteuerungsverbindung mit elektrischer Energie von dem Wechselrichter versorgt werden. Bei einer anderen Ausführungsform der Erfindung kann die Ansteuerungsverbindung mit der elektrischen Verbindungsleitung zwischen dem Wechselrichter und dem Gleichspannungsschalter zusammenfallen. Steuerungssignale können bei dieser Ausführungsform beispielsweise in Form von aufmodulierten Signalen an den Gleichspannungsschalter übertragen werden.

Bevorzugt ist aber, wenn die Ansteuerungsverbindung und die elektrische Verbindungsleitung voneinander unabhängig sind und insbesondere durch voneinander getrennte Leitungen gebildet sind. Bevorzugt ist die Ansteuerungsverbindung durch eine Ansteuerungsverbindungsleitung gebildet. Die Ansteuerungsverbindungsleitung kann direkt zwischen dem Wechselrichter und dem Gleichspannungsschalter verlaufen. Auf diese Weise wird eine sichere Verbindung zur Ansteuerung des Gleichspannungsschalters gewährleistet. Wenn die Ansteuerungsverbindung durch eine Ansteuerungsverbindungsleitung gebildet ist, kann zudem die Energieversorgung des Gleichspannungsschalters, insbesondere eines noch weiter unten näher zu beschreibenden elektrischen Antriebsmotors, über diese erfolgen.

Um den Gleichspannungsschalter in der Schließstellung und/oder der Offenstellung zu halten und unbeabsichtigte Schaltvorgänge zu vermeiden, ist es günstig, wenn der Gleichspannungsschalter in die Schließstellung und/oder die Offenstellung vorzugsweise mit einem Federelement, insbesondere einer Drehfeder, vorgespannt ist. Das Federelement kann beispielsweise innerhalb des Rastwerks oder an dem zumindest einen Schaltmoduls angeordnet sein. Beispielsweise kann das Federelement mit der oben erwähnten Drehscheibe gekoppelt sein.

Wenn Wartungs- oder Reparaturarbeiten an einer Photovoltaikanlage vorgenommen werden, ist es günstig, wenn der Gleichspannungsschalter eine Griffeinheit aufweist und sowohl manuell, als auch vorzugsweise automatisiert durch den Wechselrichter zwischen der Schließstellung und der Offenstellung schaltbar ist. Der Gleichspannungsschalter kann somit von Hand mit der Griffeinheit zwischen der Schließstellung und der Offenstellung geschaltet werden. Zu diesem Zweck kann die Griffeinheit mit dem zumindest einen Schaltmodul und/oder dem Rastwerk, insbesondere dem zumindest einen beweglichen Kontakt, mechanisch gekoppelt sein. Die Griffeinheit kann ein drehbares Griffelement aufweisen, mit welchem das Rastwerk bzw. das Schaltmodul geschaltet werden kann.

Um ein manuelles Betätigen des Gleichspannungsschalters zu vermeiden, beispielsweise nachdem dieser von dem Wechselrichter in die Offenstellung überführt wurde, kann vorgesehen sein, dass der Gleichspannungsschalter zwischen einer Kopplungsstellung, in welcher ein manuelles Schalten des Gleichspannungsschalter zwischen der Schließstellung und der Offenstellung ermöglicht ist, und einer Entkopplungsstellung, in welcher ein manuelles Schalten des Gleichspannungsschalter zwischen der Schließstellung und der Offenstellung verhindert wird, überführbar ist. Hierzu kann der Gleichspannungsschalter einen Kopplungsmechanismus mit einem Kopplungselement aufweisen, über welches die Griffeinheit mit dem zumindest einen Schaltmodul gekoppelt werden kann. In der Kopplungsstellung kann die Griffeinheit mit dem Schaltmodul über das Kopplungselement mechanisch gekoppelt sein. In der Entkopplungsstellung kann die Griffeinheit von dem Schaltmodul durch das Kopplungselement mechanisch entkoppelt sein. Um die Kopplung und die Entkopplung zu ermöglichen, kann das Kopplungselement verschieblich ausgebildet sein. Um eine Drehbewegung des Griffelements auf das Schaltmodul zu übertragen, kann das Kopplungselement drehbar gelagert sein.

Bei einer besonders bevorzugten Ausführungsform der Erfindung ist vorgesehen, dass der Gleichspannungsschalter zumindest einen elektrischen Antriebsmotor aufweist, der dazu eingerichtet ist, den Gleichspannungsschalter zwischen der Schließstellung und der Offenstellung zu überführen. Günstig ist, wenn der Antriebsmotor mit dem Wechselrichter über die Ansteuerungsverbindung verbunden und von diesem auch mit elektrischer Energie versorgt wird. Der Antriebsmotor kann beispielsweise ein Gleichstrommotor oder ein bürstenloser Gleichstrommotor (brushless DC-Motor) sein. Der Antriebsmotor kann mit dem Rastwerk gekoppelt sein, beispielsweise über ein Getriebe. Durch Drehen des Antriebsmotors in die eine Richtung kann der Gleichspannungsschalter von der Schließstellung in die Offenstellung überführt werden. Durch Drehen des Antriebsmotors in die andere Richtung kann der Gleichspannungsschalter von der Offenstellung in die Schließstellung überführt werden. Der Antriebsmotor kann auch in eine Verriegelungs- oder Bremsstellung gebracht werden, um eine unbeabsichtigte Aktivierung des Antriebsmotors zu vermeiden. In der Verriegelungs- oder Bremsstellung wird der Antriebsmotor gebremst und kann somit den Gleichspannungsschalter nicht von der Schließstellung in die Offenstellung oder vice versa überführen. Bei einer besonders bevorzugten Ausführungsform der Erfindung kann der Antriebsmotor auch dazu ausgebildet sein, den Gleichspannungsschalter wie oben beschrieben zwischen der Kopplungsstellung und der Entkopplungsstellung überführen. Der Antriebsmotor kann dabei das Kopplungselement entsprechend verschieben, beispielsweise über eine Kulissenführung oder durch ein Getriebe mit zwei Getriebeausgängen, wobei ein Getriebeausgang dem Kopplungsmechanismus und ein Getriebeausgang dem Rastwerk zugeordnet ist. Alternativ kann auch ein weiterer Antriebsmotor vorgesehen sein, der den Gleichspannungsschalter zwischen der Kopplungsstellung und der Entkopplungsstellung durch Verschiebung des Kopplungselements überführen kann.

Da Gleichspannungsschalter nur selten betätigt werden, deren Funktion für die Sicherheit aber von grundlegender Bedeutung ist, sind Überprüfungen der Funktionsfähigkeit von großer Bedeutung. Außerdem ist es für die korrekte Ansteuerung vorteilhaft, wenn zusätzlich überprüft werden kann, in welcher Stellung sich der Gleichspannungsschalter befindet. Günstig ist daher, wenn die Steuerungseinrichtung dazu eingerichtet ist, einen Motorstrom und/oder eine Motorspannung des elektrischen Antriebsmotors zu erfassen und auf Basis des Motorstroms und/oder der Motorspannung eine Schaltstellung des Gleichspannungsschalter zu detektieren und/oder einen Defekt des Gleichspannungsschalters festzustellen. Die Erfassung des Motorstroms und/oder der Motorspannung kann beispielsweise durch Messung an der Ansteuerungsverbindung erfolgen. Ein Defekt liegt beispielsweise vor, wenn ein Getriebe des Antriebsmotors, ein Schaltmodul oder das Rastwerk blockiert ist. Ein Defekt liegt auch vor, wenn das Getriebe gebrochen ist und dem Antriebsmotor ein geringerer Widerstand entgegengesetzt wird. Solche Defekte können durch Erfassung des Motorstroms und/oder der Motorspannung und Vergleich mit einem Soll-Motorstrom und/oder einer Soll-Motorspannung für eine jeweilige Betriebssituation erkannt werden, da die genannten Größen in diesem Fall von den bekannten Sollgrößen abweichen. Ein Defekt kann detektiert werden, wenn die Abweichung eines erfassten Motorstroms von einem Soll-Motorstrom und/oder die Abweichung einer erfassten Motorspannung von einer Soll-Motorspannung einen jeweiligen Grenzwert übersteigt. Beispielsweise steigt im Fall einer mechanischen Blockade des Getriebes, des Schaltmoduls oder des Rastwerks der Motorstrom stärker an und/oder es ist ein größerer Motorstrom erforderlich, als dies bei einem nicht blockierten Getriebe bzw. nicht blockierten Rastwerk der Fall ist. Umgekehrt bezieht ein Antriebsmotor, der aufgrund eines Getriebedefekts im Wesentlichen freiläuft und nur einen geringen mechanischen Widerstand erfährt, einen geringeren Motorstrom, als dies bei einem nicht freilaufenden, d.h. funktionstüchtigen, Getriebe, der Fall ist. Durch Analyse des erfassten Motorstroms und/oder der Motorspannung ist es zudem möglich, eine Schaltstellung des Gleichspannungsschalters zu erkennen. Wenn die Offenstellung und die Schließstellung des Gleichspannungsschalters beispielsweise durch Endlagen des Gleichspannungsschalters gebildet sind, wird ein Weiterdrehen des Antriebsmotors über die Endlage hinaus blockiert. Dies führt aufgrund des mechanischen Widerstands zu einem hohen Anstieg des Motorstroms, sodass aus der Kenntnis der Drehrichtung des Antriebsmotors und Erfassung des Motorstroms und/oder der Motorspannung auf die Schaltstellung geschlossen werden kann. Dadurch ist es möglich, die Schaltstellung des Gleichspannungsschalters zu eruieren, ohne den Gleichspannungsschalter zu schalten. Des Weiteren ist es bei Federvorspannung in der Offenstellung und in der Schließstellung und bei Kenntnis der Drehrichtung sowie des Soll-Motorstroms und/oder der Soll-Motorspannung bei Drehung in die Federvorspannung unter Erfassung des Motorstroms und/oder der Motorspannung ebenfalls möglich, die Schaltstellung des Gleichspannungsschalters zu eruieren, ohne den Gleichspannungsschalter zu schalten, indem der Gleichspannungsschalter nur teilweise in die Federvorspannung gedreht wird. Nach Deaktivieren des Antriebsmotors wird der Gleichspannungsschalter durch die Federvorspannung zurück in die anfängliche Stellung - also die Offen- oder Schließstellung - gedrückt. Ohne Kenntnis der Drehrichtung, aber bei unterschiedlicher Federvorspannung in der Offenstellung und in der Schließstellung ist es möglich, auf Basis der Kenntnis des Soll-Motorstroms und/oder der Soll-Motorspannung bei Drehung in die unterschiedlichen Federvorspannung und Erfassung des Motorstroms und/oder der Motorspannung eine Schaltstellung zu bestimmen.

Alternativ ist es möglich, mithilfe von Hilfskontakten im Gleichspannungsschalter, insbesondere an dem Rastwerk und/oder an dem zumindest einen Schaltmodul, eine Schaltstellung des Gleichspannungsschalters zu detektieren. Die Hilfskontakte können in Abhängigkeit der Schaltstellung geschaltet und dadurch der Steuerungseinrichtung mitgeteilt werden, in welcher Schaltstellung sich der Gleichspannungsschalter befindet. Bei einer Ausführungsform werden die Hilfskontakte beispielsweise durch einen Vorsprung oder eine Vertiefung des Rastwerks oder des Schaltmoduls geschaltet. Insbesondere kann durch Betätigung des Schaltmoduls oder des Rastwerks ein Vorsprung oder eine Vertiefung an einem Hilfskontakt schalten. Beim Schalten eines Hilfskontakts kann beispielsweise ein Stromkreis geschlossen werden, sodass eine jeweilige Schaltstellung indiziert wird. Bei einer Ausführungsform kann ein Hilfskontakt durch das Rastwerk geschaltet werden, wenn der Gleichspannungsschalter in die Schließstellung überführt wird. Auch der Kopplungsmechanismus kann auf analoge Weise einen Hilfskontakt schalten, um beispielsweise anzuzeigen, dass der Gleichspannungsschalter sich in der Kopplungsstellung befindet.

Vorteilhaft ist, wenn die Steuerungseinrichtung eine Fehlererkennungseinheit zur Erkennung von Fehlerzuständen des Wechselrichters, des Gleichspannungsschalter und/oder des zumindest einen Photovoltaikmoduls aufweist und die Steuerungseinrichtung dazu eingerichtet ist, den Gleichspannungsschalter in die Offenstellung zu schalten, wenn die Fehlererkennungseinheit einen Fehlerzustand erkannt hat. Dadurch wird der Wechselrichter von dem zumindest einen Photovoltaikmodul getrennt. Ein Fehlerzustand kann beispielsweise vorliegen, wenn in einem Gleichspannungszwischenkreis des Wechselrichters oder an einer anderen Stelle in dem elektrischen System eine Spannung gemessen wird, die einen oberen Grenzwert überschreitet oder einen unteren Grenzwert unterschreitet. Ein weiterer Fehlerzustand kann vorliegen, wenn Umkehrströme - sogenannte Reverse Currents - detektiert werden. Umkehrströme können beispielsweise durch eine teilweise Verschattung oder Abdeckung zumindest eines Photovoltaikmoduls entstehen. Umkehrströme können auch vorliegen, wenn ein Photovoltaikmodul defekt ist. Die Fehlererkennungseinheit kann in die Steuerungseinheit des Wechselrichters integriert sein. Umkehrströme können beispielsweise mithilfe einer Strommesseinrichtung erkannt werden. Wenn ein Gleichstrom seine Richtung ändert, d.h. in die entgegengesetzte Richtung fließt, liegt ein Umkehrstrom vor. Ein Umkehrstrom liegt beispielsweise vor, wenn ein Strom in einer Verbindungsleitung nicht mehr in den Wechselrichter fließt, sondern in Richtung einer Photovoltaikanlage. Wenn kein Fehlerzustand mehr vorliegt, beispielsweise, weil keine Umkehrströme mehr detektiert werden, kann der Gleichspannungsschalter wieder in die Schließstellung überführt werden.

Ein besonders kompaktes System ergibt sich, wenn der Wechselrichter ein Wechselrichtergehäuse aufweist und der Gleichspannungsschalter zumindest teilweise, vorzugsweise vollständig, innerhalb des Wechselrichtergehäuses angeordnet ist. Dadurch kann der Gleichspannungsschalter zusätzlich geschützt werden. Zudem kann dadurch die Ansteuerungsverbindung kurz gehalten werden. Das Wechselrichtergehäuse kann aus Kunststoff bestehen. Das Wechselrichtergehäuse kann die Leistungselektronik des Wechselrichters sowie die Steuerungseinrichtung umgeben. Über eine Öffnung des Wechselrichtergehäuses kann der Gleichspannungsschalter zum manuellen Schalten zugänglich sein.

Um den Gleichspannungsschalter aus der Ferne zu steuern, ist es günstig, wenn der Wechselrichter mit einem entfernten Server verbindbar ist und die Steuerungseinrichtung dazu eingerichtet ist, Befehle von dem Server zu empfangen, um den Gleichspannungsschalter zu schalten. Dadurch ist es beispielsweise nach Installation und Abnahme einer Photovoltaikanlage möglich, diese von der Ferne zu aktivieren. Die Aktivierung aus der Ferne kann beispielsweise von einem Hersteller des Wechselrichters, von einem Installationsunternehmen oder einem Energieversorgungsunternehmen vorgenommen werden. Darüber hinaus können beispielsweise Einsatzorganisationen, denen ein Einsatz in der Nähe der Photovoltaikanlage gemeldet wurde, die Photovoltaikanlage vorsorglich abschalten, d.h. das zumindest eine Photovoltaikmodul von dem Wechselrichter trennen. Der Server kann über eine Datenverbindung mit der Steuerungseinrichtung verbunden sein. Die Datenverbindung kann durch eine drahtlose oder verdrahtete Verbindung, beispielswiese ein Ethernetkabel, gebildet sein.

Die Erfindung betrifft auch ein Verfahren zum Betreiben eines oben beschriebenen elektrischen Systems zur Verbindung zumindest eines Photovoltaikmoduls mit einem Energieversorgungsnetz. Dabei ist der Gleichspannungsschalter mit dem Wechselrichter über die elektrische Verbindungsleitung sowie über die Ansteuerungsverbindung verbunden. Der Gleichspannungsschalter ist des Weiteren mit dem zumindest einen Photovoltaikmodul über eine weitere elektrische Verbindungsleitung verbunden. Der Gleichspannungsschalter, der Wechselrichter und das zumindest eine Photovoltaikmodul sind Teile einer Photovoltaikanlage. Bei dem Verfahren ist vorgesehen, dass
der Gleichspannungsschalter durch die Steuerungseinrichtung von der Offenstellung in die Schließstellung geschaltet wird, um das zumindest eine Photovoltaikmodul mit dem Energieversorgungsnetz elektrisch zu verbinden und/oder
der Gleichspannungsschalter durch die Steuerungseinrichtung von der Schließstellung in die Offenstellung geschaltet wird, um das zumindest eine Photovoltaikmodul von dem Energieversorgungsnetz elektrisch zu trennen.

Die oben in Zusammenhang mit dem System zur Verbindung zumindest eines Photovoltaikmoduls mit einem Energieversorgungsnetz beschriebenen Vorteile, Effekte und Merkmale sind auf das Verfahren zu dessen Betrieb übertragbar.

Bei einer Ausführungsform der Erfindung ist vorgesehen, dass der Wechselrichter mit einem Server verbunden ist und der Gleichspannungsschalter mittels einer Fernschaltung über den Server zwischen der Schließstellung und der Offenstellung geschaltet wird. Dies ist insbesondere vorteilhaft, um eine Photovoltaikanlage nach deren Installation und Abnahme in Betrieb zu setzen oder bei Gefahr aus der Ferne zu deaktivieren. Beispielsweise kann eine Einsatzorganisation Zugriff auf den Server haben und bereits vor einem Einsatz den Gleichspannungsschalter deaktivieren.

Bei einer Ausführungsform der Erfindung wird nach Erkennung eines Fehlerzustands der Gleichspannungsschalter durch den Wechselrichter über die Ansteuerungsverbindung in die Offenstellung überführt. Dadurch können (weitere) Schäden vermieden und das Risiko von Stromunfällen, beispielswiese für Einsatzkräfte in der Nähe des elektrischen Systems, vermieden werden. Wenn kein Fehlerzustand mehr vorliegt, kann der Gleichspannungsschalter wieder in die Schließstellung überführt werden.

Bei dem Fehlerzustand kann es sich um Folgendes handeln:
- ein Fehlerzustand des Wechselrichters, beispielsweise ein Defekt eines Zwischenkreises;
- ein Fehlerzustand des Gleichspannungsschalters, beispielsweise eine Blockade, insbesondere eine Blockade eines Rastwerks oder eines Schaltmoduls; und/oder
- ein Fehlerzustand des zumindest einen Photovoltaikmoduls, beispielsweise eine Abschattung.

Ein Defekt des Zwischenkreises kann beispielsweise durch Messung einer Spannung des Zwischenkreises festgestellt werden, die einen oberen Grenzwert überschreitet oder einen unteren Grenzwert unterschreitet. Ein weiterer Fehlerzustand des Wechselrichters kann darin liegen, dass ein elektrischer Strom innerhalb des Wechselrichters einen Grenzwert überschreitet. Ein Fehlerzustand des Gleichspannungsschalters kann beispielsweise vorliegen, wenn ein Antriebsmotor des Gleichspannungsschalters defekt ist, was beispielsweise durch Messung eines Motorstroms und/oder einer Motorspannung festgestellt werden kann. Zum Beispiel kann sich ein Zahnrad des Getriebes gelöst haben, sodass das Getriebe freiläuft und keinen oder einen verringerten mechanischen Widerstand bietet. Ein Fehlerzustand des Gleichspannungsschalters kann auch vorliegen, wenn beispielsweise ein Getriebe oder ein Rastwerk des Gleichspannungsschalters blockiert ist, was ebenfalls durch Messung eines beispielsweise erhöhten Motorstroms und/oder einer Motorspannung festgestellt werden kann. Ein Fehlerzustand des Photovoltaikmoduls kann durch Messen des Gleichstromes und/oder der Gleichspannung an der Gleichspannungsseite festgestellt werden. Beispielsweise können Umkehrströme (Reverse Currents) detektiert werden, indem ein Wechsel der Stromrichtung gemessen wird.

Nachfolgend wird die Erfindung anhand von Figuren näher erläutert, auf die sie jedoch nicht beschränkt sein soll. Es zeigen:
Fig. 1 ein Blockschaltbild eines elektrischen Systems;
Fig. 2 ein Blockschaltbild von Komponenten eines Gleichspannungsschalters;
Fig. 3 eine Explosionsdarstellung eines Gleichspannungsschalters;
Fig. 4 eine Explosionsdarstellung eines Rastwerks;
Fig. 5A einen Gleichspannungsschalter gemäß einer ersten Ausführungsform in einer Entkopplungsstellung; Fig. 5B den Gleichspannungsschalter der ersten Ausführungsform in der Kopplungsstellung;
Fig. 6A einen Gleichspannungsschalter gemäß einer zweiten Ausführungsform in einer Entkopplungsstellung; Fig. 6B den Gleichspannungsschalter der zweiten Ausführungsform in der Kopplungsstellung; und
Fig. 7 eine Motorkennlinie.

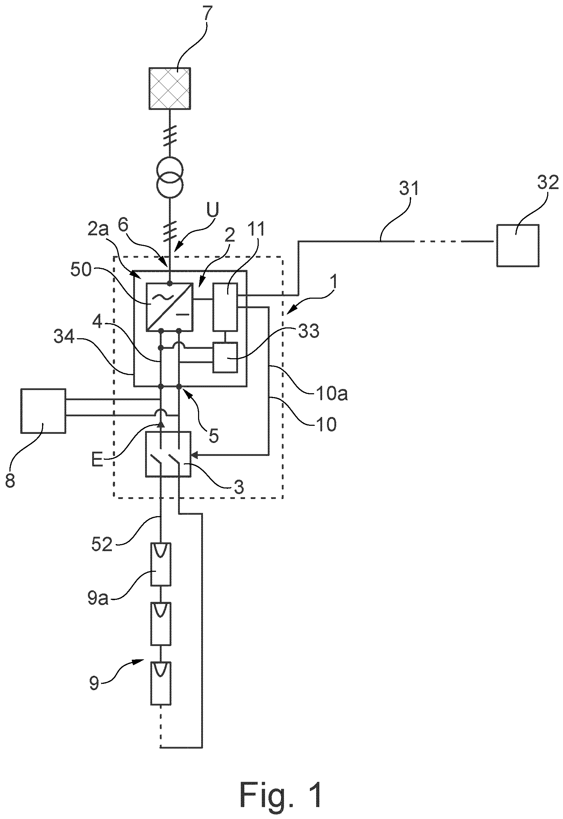

Fig. 1 zeigt ein elektrisches System 1 mit einem Wechselrichter 2 und einem Gleichspannungsschalter 3, der über zumindest eine elektrische Verbindungsleitung 4 mit einer Gleichspannungsseite 5 des Wechselrichters 2 verbunden ist. An einer Wechselspannungsseite 6 ist der Wechselrichter 2 mit einem lokalen Energieversorgungsnetz 7 eines Gebäudes (nicht gezeigt) verbunden. An der Gleichspannungsseite 5 des Wechselrichters 2 ist in dem gezeigten Ausführungsbeispiel des Weiteren noch ein elektrischer Energiespeicher 8 angeschlossen. Der Wechselrichter 2 ist vorzugsweise als dreiphasiger Wechselrichter 2a ausgebildet, welcher drei zueinander phasenversetzte Wechselspannungen U erzeugt. Die Wechselspannungen U können einen Effektivwert von 230 V gegen einen Neutralleiter (nicht gezeigt) besitzen. Über den Gleichspannungsschalter 3 ist zumindest ein Photovoltaikmodul 9 mit mehreren zusammengeschalteten Zellen 9a angeschlossen. Der Gleichspannungsschalter 3 ist mit dem zumindest einen Photovoltaikmodul 9 über weitere Verbindungsleitungen 52 verbunden. Das zumindest eine Photovoltaikmodul 9 kann Gleichspannungen und Gleichströme erzeugen, die dem Wechselrichter 2 zur Verfügung gestellt werden.

Um im Fehlerfall das zumindest eine Photovoltaikmodul 9 von dem Wechselrichter 2 elektrisch trennen zu können, kann der Gleichspannungsschalter 3 zwischen einer Schließstellung, in welcher elektrische Energie E zwischen dem Wechselrichter 2 und dem zumindest einen Photovoltaikmodul 9 übertragbar ist, und einer Offenstellung, in welcher der Wechselrichter 2 von dem zumindest einen Photovoltaikmodul 9 elektrisch getrennt ist, geschaltet werden. Um den Gleichspannungsschalter 3 anzusteuern, ist eine Ansteuerungsverbindung 10 in Form einer Ansteuerungsverbindungsleitung 10a vorgesehen, die direkt zwischen dem Wechselrichter 2, insbesondere einer Steuerungseinrichtung 11, und dem Gleichspannungsschalter 3 geführt ist. Die Ansteuerungsverbindungsleitung 10a ist von der elektrischen Verbindungsleitung 4 unabhängig, d.h. getrennt. Die Ansteuerungsverbindungsleitung 10a und die Verbindungsleitung 4 bilden somit jeweils eigenständige Leitungen. Über die Ansteuerungsverbindungsleitung 10a kann die Steuerungseinrichtung 11 des Wechselrichters 2 den Gleichspannungsschalter 3 schalten. Neben der Steuerungseinrichtung 11 weist der Wechselrichter 2 noch eine leistungselektronische Baugruppe 50 zur Erzeugung der Wechselspannungen U auf. In dieser leistungselektronischen Baugruppe 50 kann auch ein Hochsetzsteller und/oder ein Spannungszwischenkreis enthalten sein.

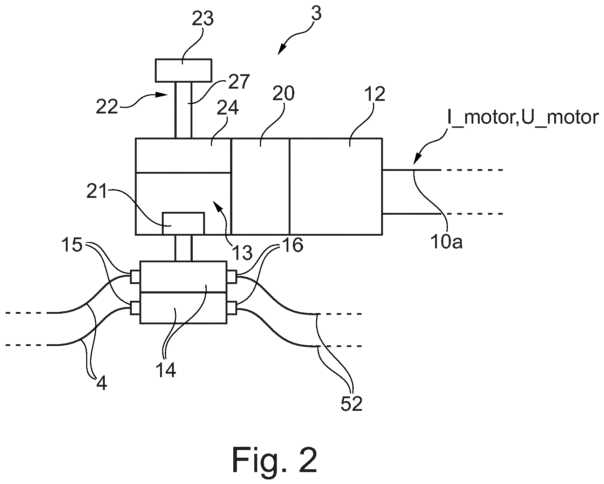

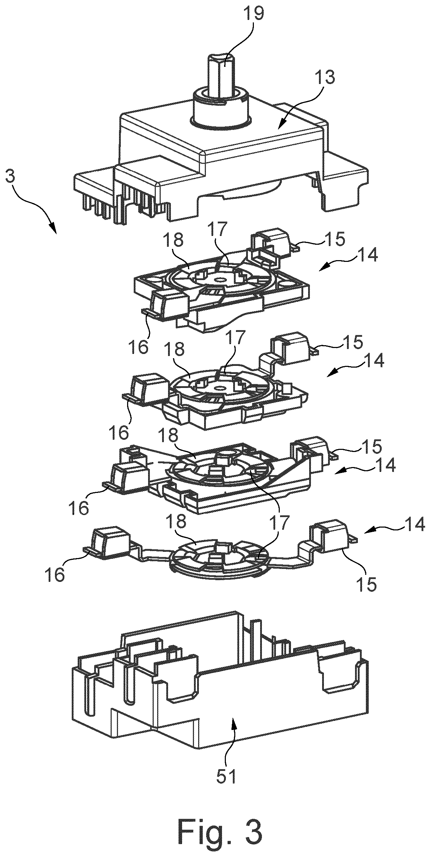

Fig. 2 zeigt eine schematische Blockdarstellung der einzelnen Komponenten des Gleichspannungsschalters 3. Um den Gleichspannungsschalter 3 zu schalten, kann ein elektrischer Antriebsmotor 12 vorgesehen sein, der von der Steuerungseinrichtung 11 über die Ansteuerungsverbindungsleitung 10a angesteuert werden kann. Der Antriebsmotor 12 kann beispielsweise als bürstenloser Gleichstrommotor ausgebildet sein und ein Rastwerk 13 des Gleichspannungsschalters 3 aktuieren. Das Rastwerk 13 kann mit zumindest einem Schaltmodul 14 mechanisch verbunden sein, welches einen ersten feststehenden Kontakt 15, einen zweiten feststehenden Kontakt 16 sowie einen beweglichen Kontakt 17, wie in Fig. 3 gezeigt, aufweisen kann. In Fig. 2 sind zwei Schaltmodule 14 gezeigt. Der bewegliche Kontakt 17 kann zum Zwecke der Drehbarkeit in einer Drehscheibe 18 angeordnet sein. In der Schließstellung des Gleichspannungsschalters 3 kontaktiert der bewegliche Kontakt 17 den ersten 15 und den zweiten Kontakt 16. In der Offenstellung des Gleichspannungsschalters 3 ist der bewegliche Kontakt 17 derart gedreht, dass dieser weder den ersten 15, noch den zweiten Kontakt 16 kontaktiert. Das Rastwerk 13 kann, wie in Fig. 2 und Fig. 3 gezeigt, mit mehreren Schaltmodulen 14 verbunden sein. Die Schaltmodule 14 können derart an den Drehscheiben 18 miteinander verbunden sein, dass eine Drehbewegung des einen Schaltmoduls 14 auf das jeweils nächste Schaltmodul 14 übertragen wird und die Schaltmodule 14 gleichzeitig schalten. Das Rastwerk 13 kann beispielsweise das oberste, dem Rastwerk 13 zugeordnete Schaltmodul 14 schalten.

Wie unter anderem in Fig. 2 gezeigt, kann das Rastwerk 13 von dem Antriebsmotor 12 beispielsweise über ein Getriebe 20 angetrieben werden, um den Gleichspannungsschalter 3 zwischen der Offenstellung und der Schließstellung zu schalten. Das Getriebe 20 kann zur Übersetzung einer Drehbewegung Zahnräder aufweisen. Die ersten Kontakte 15 der Schaltmodule 14 können mit der Gleichspannungsseite 5 des Wechselrichters 2 verbunden sein. Die zweiten Kontakte 16 können mit dem zumindest einen Photovoltaikmodul 9 verbunden sein. Um den Gleichspannungsschalter 3 in der Offenstellung und in der Schließstellung zu sichern, kann vorgesehen sein, dass die beweglichen Kontakte 17 in der Offenstellung und in der Schließstellung in die jeweiligen Positionen mittels eines Federelements 21 des Rastwerks 13 vorgespannt sind.

Der Gleichspannungsschalter 3 kann zusätzlich zu dem Antriebsmotor 12 eine Griffeinheit 22 mit einem Griffelement 23 und einer Griffachse 27 aufweisen, um den Gleichspannungsschalter 3 händisch zwischen der Offenstellung und der Schließstellung zu schalten. Das Getriebe 20 kann dabei nicht-selbsthemmend ausgeführt sein.

Fig. 3 zeigt eine Explosionsdarstellung eines Gleichspannungsschalters 3 mit einem Rastwerk 13 und mehreren Schaltmodulen 14, wobei der Antriebsmotor 12 und die Griffeinheit 22 aus Gründen der Übersicht nicht gezeigt sind. Erkennbar ist, dass ein Gehäuse 51 des Gleichspannungsschalters 3, innerhalb dessen die Schaltmodule 14 und das Rastwerk 13 angeordnet sein können, mehrteilig ausgeführt ist.

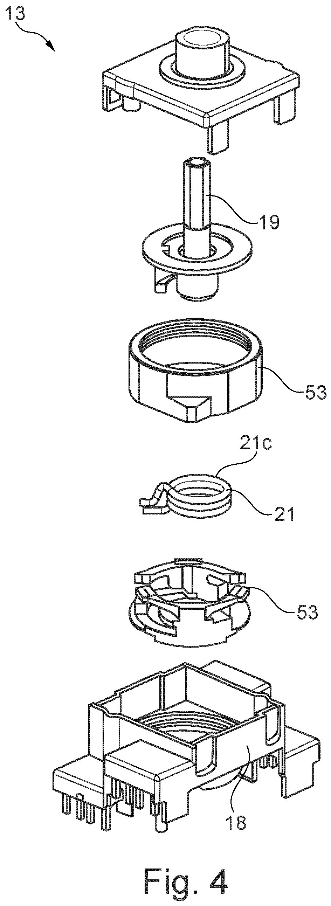

Fig. 4 zeigt ein Rastwerk 13 in einer Explosionsdarstellung.

Rastwerke 13 und deren Funktion sind aus dem Stand der Technik bekannt, sodass hier nicht im Detail darauf eingegangen wird. Ersichtlich ist, dass das Rastwerk 13 eine Antriebswelle 19, das Federelement 21 in Form einer Drehfeder 21a sowie weitere Rastwerkkomponenten 53 aufweist, die dazu dienen, den Gleichspannungsschalter 3 in der Offenstellung und/oder in der Schließstellung durch Federvorspannung zu verrasten. Durch Drehen des Rastwerks 13 kann der Gleichspannungsschalter 3 geschaltet werden. Bei einer Ausführungsform kann das Rastwerk 13 bis zu einem Grenzwinkel gedreht werden, ohne dass dieses schaltet. Nach Überschreiten des Grenzwinkels, der beispielswiese bei 70° liegen kann, springt das Rastwerk 13 von einer ersten Raststellung in eine zweite Raststellung und bleibt dort verrastet, vorzugsweise aufgrund einer Federspannung. Beim Umschalten von der zweiten in die erste Raststellung läuft der Vorgang analog ab. Durch Umschalten zwischen den Raststellungen kann der Gleichspannungsschalter 3 zwischen der Offenstellung und der Schließstellung geschaltet werden. Die Antriebswelle 19 kann mit dem Antriebsmotor 12 und/oder mit der Griffachse 27 mechanisch gekoppelt werden, gegebenenfalls über einen noch näher zu beschreibenden Kopplungsmechanismus 24.

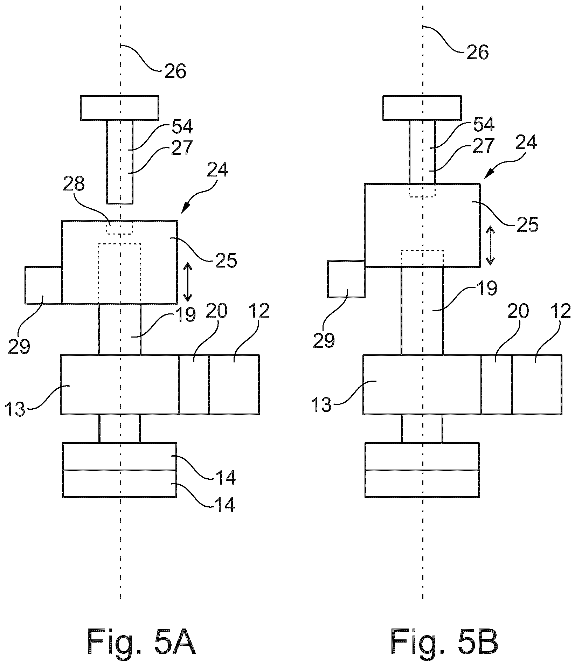

Um zu verhindern, dass der Gleichspannungsschalter 3 geschaltet wird, nachdem dieser bereits von dem Antriebsmotor 12 geschaltet wurde, kann ein Kopplungsmechanismus 24 vorgesehen sein, der mit dem Rastwerk 13 verbunden sein kann. Der Kopplungsmechanismus 24 kann den Gleichspannungsschalter 3 zwischen einer Kopplungsstellung (siehe Fig. 5B), in welcher ein manuelles Schalten des Gleichspannungsschalter 3 zwischen der Schließstellung und der Offenstellung ermöglicht ist, und einer Entkopplungsstellung (siehe Fig. 5A), in welcher ein manuelles Schalten des Gleichspannungsschalters 3 zwischen der Schließstellung und der Offenstellung verhindert wird, überführen. Der Kopplungsmechanismus 24 kann ein verschiebliches Kopplungselement 25 aufweisen, welches die Griffeinheit 22 in der Kopplungsstellung mit dem Rastwerk 13 mechanisch koppelt und in der Entkopplungsstellung von dem Rastwerk 13 entkoppelt. Zu diesem Zweck kann das Entkopplungselement 25 beispielsweise entlang einer Drehachse 26 des Rastwerks 13 verschieblich gelagert sein. In der Kopplungsstellung (siehe Fig. 5B) kann durch Formschluss der Griffachse 27 mit dem Kopplungselement 25 eine Drehbewegung der Griffeinheit 22 auf das Rastwerk 13 übertragen werden. Der Formschluss wirkt insbesondere in eine Umfangsrichtung der Griffachse 27. Die Querschnittsfläche der Griffachse 27 kann für den Formschluss polygonal ausgestaltet sein kann. Das Kopplungselement 25 kann eine entsprechende Kopplungsöffnung 28 aufweisen, in welche die Griffachse 27 in der Kopplungsstellung in Drehrichtung um die Drehachse 26 formschlüssig aufgenommen sein kann. In der Kopplungsstellung greift die Griffachse 27 in die Kopplungsöffnung 28 ein. Die Kopplungsöffnung 28 kann eine ebenfalls polygonale Querschnittsfläche aufweisen. Bevorzugt ist, wenn die Querschnittsfläche der Griffachse 27 im Wesentlichen der Querschnittsfläche der Kopplungsöffnung 28 entspricht. In der Entkopplungsstellung kann der Formschluss zwischen dem Kopplungselement 25 und der Griffachse 27 durch Verschiebung des Kopplungselements 25 gelöst sein, sodass eine Drehbewegung der Griffeinheit 22 nicht auf das Rastwerk 13 übertragen wird (Fig. 5A). In der Entkopplungsstellung kann die Griffeinheit 22 daher beispielsweise frei drehen. Auch die Antriebswelle 19 kann formschlüssig in eine entsprechende Öffnung des Kopplungselements 25 aufgenommen sein, wobei der Formschluss wiederum umfangseitig um die Antriebswelle 19 wirkt. Entlang der Achse der Antriebswelle 19 ist das Kopplungselement 25 verschieblich. Der umfangsseitige Formschluss zwischen der Antriebswelle 19 und dem Kopplungselement 25 kann bei einer Ausführungsform sowohl in der Kopplungsstellung, als auch in der Entkopplungsstellung vorliegen.

Der Kopplungsmechanismus 24 kann zum Beispiel durch einen weiteren Antriebsmotor 29, beispielsweise einen Linearmotor oder eine Motor-Getriebekombination zur Erzeugung einer translatorischen Verschiebung des Kopplungselements 25, aktuiert werden. Der weitere Antriebsmotor 29 kann das Kopplungselement 25 dabei verschieben, um den Gleichspannungsschalter 3 zwischen der Schließstellung und der Offenstellung zu überführen. Der weitere Antriebsmotor 29 kann beispielsweise ebenfalls von der Steuerungseinrichtung 11 angesteuert werden. Die Verschiebung des Kopplungselements 25 kann gleichzeitig mit oder vor der Überführung des Gleichspannungsschalters 3 zwischen der Schließstellung und der Offenstellung durch den Antriebsmotor 12 erfolgen.

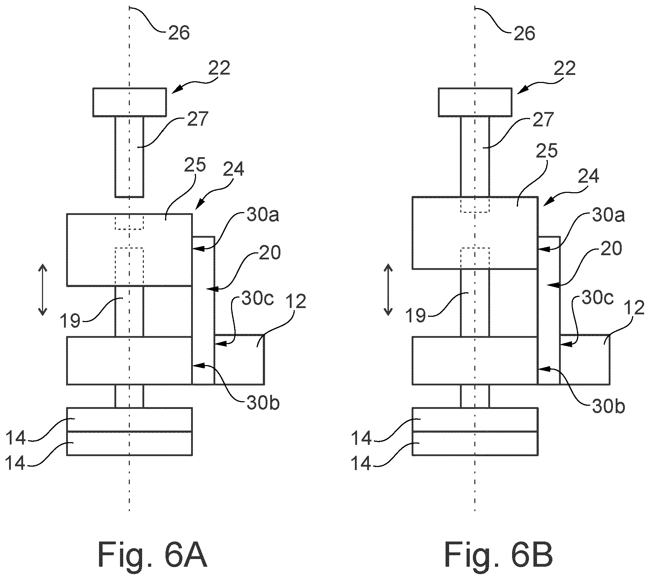

Alternativ ist es auch möglich, dass der Antriebsmotor 12 den Kopplungsmechanismus 24 aktuiert, wie anhand der Figuren Fig. 6A und Fig. 6B veranschaulicht ist. Zu diesem Zweck kann das Getriebe 20 zwei mechanische Getriebeausgänge 30a, 30b besitzen. Ein erster mechanischer Getriebeausgang 30a kann dem Kopplungsmechanismus 24 zugeordnet sein und das Kopplungselement 25 wie oben beschrieben entlang der Drehachse 26 verschieben, um den Gleichspannungsschalter 3 zwischen der Kopplungsstellung und der Entkopplungsstellung zu überführen. Ein zweiter mechanischer Getriebeausgang 30b kann dem Rastwerk 13 zugeordnet sein, um den Gleichspannungsschalter 3 zwischen der Offenstellung und der Schließstellung zu überführen. Auf diese Weise kann die Griffeinheit 22 von dem Rastwerk 13 entkoppelt und gleichzeitig oder zeitversetzt der Gleichspannungsschalter 3 von der Schließstellung in die Offenstellung überführt werden. Auf diese Weise wird verhindert, dass der Gleichspannungsschalter 3 händisch mit dem Griffelement 23 wieder in die Schließstellung gebracht wird, nachdem dieser von dem Wechselrichter 2 in die Offenstellung überführt wurde. Der Gleichspannungsschalter 3 kann anschließend wieder durch Ansteuern des Antriebsmotors 12 in die umgekehrte Richtung in die Schließstellung sowie in die Kopplungsstellung überführt werden.

Wie bereits erwähnt, kann die Überführung zwischen der Schließstellung und der Offenstellung sowie die Überführung zwischen der Kopplungsstellung und der Entkopplungsstellung gleichzeitig oder zeitversetzt erfolgen. Möglich ist daher, dass das Getriebe 20 eine zeitliche mechanische Verzögerung zwischen den Getriebeausgängen 30a, 30b erzeugt. Dadurch kann zunächst mithilfe des ersten Ausgangs 30a des Getriebes 20 der Kopplungsmechanismus 24 von der Kopplungsstellung in die Entkopplungsstellung überführt werden. Anschließend kann, mit zeitlicher Verzögerung, der Gleichspannungsschalter 3 von der Schließstellung in die Offenstellung überführt werden. Aufgrund der Entkopplung der Griffeinheit 22 von dem Rastwerk 13 kann ein manuelles Wiedereinschalten, d.h. ein Überführen des Gleichspannungsschalters 3 in die Schließstellung, verhindert werden. Um den Gleichspannungsschalter 3 wieder zu schließen, kann zunächst durch den zweiten Getriebeausgang 30b des Getriebes 20 der Gleichspannungsschalter 3 von der Offenstellung in die Schließstellung überführt werden.

Anschließend kann an dem ersten Getriebeausgang 30a der Kopplungsmechanismus 24 betätigt werden, um den Gleichspannungsschalter 3 in die Kopplungsstellung zu überführen. Die mechanische zeitliche Verzögerung einer Bewegungsübertragung an den Getriebeausgängen 30a, 30b kann beispielsweise durch ein oder mehrere mechanische Kupplungselemente (nicht gezeigt) innerhalb des Getriebes 20 erzielt werden, die jeweils ein Mitnahmeelement (nicht gezeigt) aufweisen. Die Kupplung der Ausgänge 30a, 30b mit dem Antriebsmotor 12 erfolgt dabei mittels der Mitnahmeelemente der jeweiligen Kupplungselemente. Das bzw. die Mitnahmeelemente können jeweils örtlich derart an den Kupplungselementen versetzt angeordnet sein, dass sich mechanisch bedingte Zeitverzögerungen der Kupplungen durch die Kupplungselemente und damit der Getriebeausgänge 30a, 30b mit dem Antriebsmotor 12 ergeben. Die beiden Getriebeausgänge 30a, 30b sind über die Kupplungselemente mit einem gemeinsamen Getriebeeingang 30c für den Antriebsmotor 12 kuppelbar.

Es ist somit möglich, die Griffeinheit 22 von dem Rastwerk 13 zu entkoppeln und gleichzeitig oder anschließend den Gleichspannungsschalter 3 von der Schließstellung in die Offenstellung zu überführen, wobei in der Entkopplungsstellung mit Griffeinheit 22 der Gleichspannungsschalter 3 nicht manuell wieder in die Schließstellung gebracht werden kann.

Die Steuerungseinrichtung 11 kann über eine Datenverbindung 31 mit einem Server 32 verbunden sein. Dadurch kann der Gleichspannungsschalter 3 per Fernschaltung über den Wechselrichter 2 zwischen der Schließstellung und der Offenstellung geschaltet werden.

Die Steuerungseinrichtung 11 kann eine Fehlererkennungseinheit 33 zur Erkennung von Fehlerzuständen des Wechselrichters 2, des Gleichspannungsschalters 3 und/oder des zumindest einen Photovoltaikmoduls 9 aufweisen. Die Steuerungseinrichtung 11 kann demnach dazu eingerichtet sein, den Gleichspannungsschalter 3 in die Offenstellung zu schalten, wenn die Fehlererkennungseinheit 33 einen Fehlerzustand erkannt hat. Die Fehlererkennungseinheit 33 kann dazu eingerichtet sein, elektrische Ströme und/oder elektrische Spannungen in oder an dem Wechselrichter 2 zu messen. Auf Basis der gemessenen Ströme und/oder Spannungen können Fehlerzustände des Wechselrichters 2, des Gleichspannungsschalter 3 und/oder des zumindest einen Photovoltaikmoduls 9 durch Vergleich mit Soll-Strömen und/oder Soll-Spannungen erkannt werden. Beispielsweise kann ein Fehlerzustand des Wechselrichters 2 erkannt werden, wenn in einem Gleichspannungszwischenkreis des Wechselrichters 2 eine Spannung gemessen wird, die einen oberen Grenzwert überschreitet oder einen unteren Grenzwert unterschreitet. Ein weiterer Fehlerzustand des Wechselrichters 2 kann erkannt werden, wenn Ströme innerhalb des Wechselrichters 2 einen oberen Grenzwert überschreiten.

Ein Fehlerzustand des zumindest einen Photovoltaikmoduls 9 kann vorliegen, wenn Umkehrströme - sogenannte Reverse Currents - detektiert werden. Umkehrströme können beispielsweise durch eine teilweise Verschattung oder Abdeckung zumindest eines Photovoltaikmoduls 9 entstehen. Umkehrströme können auch vorliegen, wenn ein Photovoltaikmodul 9 defekt ist.

Ein Fehlerzustand des Gleichspannungsschalters 3 kann insbesondere durch Messung eines Motorstrom I_motor und/oder einer Motorspannung U_motor des elektrischen Antriebsmotors 12 und Vergleich mit einem Soll-Motorstrom und/oder einer Soll-Motorspannung erkannt werden. Wenn beispielsweise der Gleichspannungsschalter 3, insbesondere das Getriebe 20 oder eines der Schaltmodule 14, mechanisch blockiert ist, führt dies zu einem erhöhten Motorstrom I_motor im Vergleich zu einem Soll-Motorstrom. Ein Vergleich des gemessenen Motorstroms I_motor mit dem Soll-Motostrom deutet somit auf eine Blockade des Gleichspannungsschalters 3 hin. Wenn hingegen beispielsweise ein Zahnrad des Getriebes 20 gelöst wurde und dadurch der mechanische Widerstand des Getriebes 20 reduziert wurde, führt dies zu einem reduzierten Motorstrom I_motor im Vergleich zu einem Soll-Motorstrom, was ebenfalls festgestellt werden kann.

Durch Erfassung des Motorstroms I_motor und/oder der Motorspannung U_motor kann zudem eine Schaltstellung des Gleichspannungsschalters 3 - d.h. die Offenstellung oder die Schließstellung - erkannt werden. Wenn die Offenstellung und die Schließstellung des Gleichspannungsschalters 3 beispielsweise mit Endlagen des Gleichspannungsschalters 3 zusammenfallen, wird ein Weiterdrehen des Antriebsmotors 12 über die Endlage hinaus blockiert. Dies führt aufgrund des mechanischen Widerstands zu einem hohen Anstieg des Motorstroms I_motor, sodass aus der Kenntnis der Drehrichtung des Antriebsmotors 12 und der Erfassung des Motorstroms I_motor und/oder der Motorspannung U_motor auf die Schaltstellung geschlossen werden kann. Dadurch ist es möglich, die Schaltstellung des Gleichspannungsschalters 3 zu eruieren, ohne den Gleichspannungsschalter 3 zu schalten. Des Weiteren ist es bei Federvorspannung durch das Federelement 21 in der Offenstellung und in der Schließstellung und bei Kenntnis der Drehrichtung bei Drehung in die Federvorspannung unter Erfassung des Motorstroms I_motor und/oder der Motorspannung U_motor und Vergleich mit entsprechenden Sollgrößen ebenfalls möglich, die Schaltstellung des Gleichspannungsschalters 3 zu eruieren, ohne den Gleichspannungsschalter 3 zu schalten, indem der Gleichspannungsschalter 3 nur teilweise in die Federvorspannung gedreht wird. Nach Deaktivieren des Antriebsmotors 12 wird der Gleichspannungsschalter 3 durch die Federvorspannung zurück in die anfängliche Stellung - also die Offen- oder Schließstellung - gedrückt.

In Fig. 1 ist der Gleichspannungsschalter 3 von dem Wechselrichter 2 entfernt angeordnet. Möglich ist jedoch auch, dass der Gleichspannungsschalter 3 zumindest teilweise innerhalb eines Wechselrichtergehäuses 34 des Wechselrichters 2 oder an dem Wechselrichtergehäuse 34 angeordnet ist.

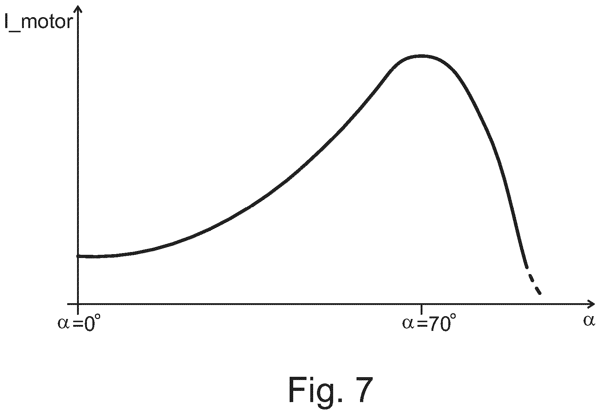

Fig. 7 zeigt einen Stromverlauf 35 des Motorstroms I_motor in Abhängigkeit eines Drehwinkels α des Rastwerks 13. Die Abszisse beschreibt den Drehwinkel α in Grad. Die Ordinate beschreibt den Motorstrom I_motor in Ampere. Erkennbar ist, dass der Motorstrom I_motor mit zunehmenden Drehwinkel α ansteigt. Dies ist auf das Federelement 21 des Rastwerks 13 zurückzuführen, das mit zunehmendem Winkel gespannt wird. Das Maximum des Motorstroms I_motor liegt kurz vor dem Umschaltvorgang des Rastwerks 13 an und kann beispielsweise bei einer 70°-Drehung des Rastwerks 13 vorhanden sein. Auf Basis des Motorstroms I_motor und unter Kenntnis des Stromverlaufs 35 kann somit festgestellt werden, ob der Gleichspannungsschalter 3 funktioniert, insbesondere, ob dieser sich drehen lässt oder blockiert ist. Würde der Motorstrom I_motor flacher ansteigen, kann davon ausgegangen werden, dass ein Defekt vorliegt, der dem Antriebsmotor 12 einen geringeren Widerstand entgegensetzt, wie etwa ein freilaufendes Getriebe 20. Bei einem stärker ansteigenden Motorstrom I_motor kann davon ausgegangen werden, dass eine Blockade vorliegt, wie etwa ein blockiertes Rastwerk 13. Möglich ist auf Basis des jeweils zu einem Drehwinkel α zugehörigen Motorstroms I_motor die Schaltposition abzuleiten. Hierbei können auch Endlagen berücksichtigt werden, die einen sehr starken Anstieg des Motorstroms I_motor bedingen. Typischerweise ist jedoch die Drehrichtung des Antriebsmotors 12 bekannt, sodass aus dem Motorstrom I_motor und der Drehrichtung die Schalterposition, beispielsweise Offenstellung oder die Schließstellung sowie den zugehörigen Drehwinkel α, und/oder die Funktionsfähigkeit des Gleichspannungsschalters 3 überprüft werden kann.

## Patentansprüche

1. Elektrisches System (1) zur Verbindung zumindest eines Photovoltaikmoduls (9) mit einem Energieversorgungsnetz (7), aufweisend:
einen Wechselrichter (2) mit einer Steuerungseinrichtung (11), einer Gleichspannungsseite (5) und einer Wechselspannungsseite (6); und
einen Gleichspannungsschalter (3) zur elektrischen Verbindung des zumindest einen Photovoltaikmoduls (9) mit dem Wechselrichter (2), wobei der Gleichspannungsschalter (3) über eine elektrische Verbindungsleitung (4) mit der Gleichspannungsseite (5) des Wechselrichters (2) elektrisch verbunden ist,
**dadurch gekennzeichnet, dass** der Wechselrichter (2) über eine Ansteuerungsverbindung (10) mit dem Gleichspannungsschalter (3) verbunden und die Steuerungseinrichtung (11) dazu eingerichtet ist, den Gleichspannungsschalter (3) über die Ansteuerungsverbindung (10) zwischen einer Schließstellung, in welcher elektrische Energie (E) zwischen dem Wechselrichter (2) und dem zumindest einen Photovoltaikmodul (9) übertragbar ist, und einer Offenstellung, in welcher der Wechselrichter (2) von dem zumindest einen Photovoltaikmodul (9) elektrisch getrennt ist, zu schalten.

2. Elektrisches System (1) nach Anspruch 1, **dadurch gekennzeichnet, dass** die Ansteuerungsverbindung (10) und die elektrische Verbindungsleitung (4) voneinander unabhängig sind und insbesondere durch voneinander getrennte Leitungen gebildet sind.

3. Elektrisches System (1) nach Anspruch 1 oder 2, **dadurch gekennzeichnet, dass** der Gleichspannungsschalter (3) in die Schließstellung und/oder die Offenstellung vorzugsweise mit einem Federelement (21), insbesondere einer Drehfeder, vorgespannt ist.

4. Elektrisches System (1) nach einem der Ansprüche 1 bis 3, **dadurch gekennzeichnet, dass** der Gleichspannungsschalter (3) eine Griffeinheit (22) aufweist und sowohl manuell, als auch vorzugsweise automatisiert durch den Wechselrichter (2) zwischen der Schließstellung und der Offenstellung schaltbar ist.

5. Elektrisches System (1) nach Anspruch 4, **dadurch gekennzeichnet, dass** der Gleichspannungsschalter (3) zwischen einer Kopplungsstellung, in welcher ein manuelles Schalten des Gleichspannungsschalters (3) zwischen der Schließstellung und der Offenstellung ermöglicht ist, und einer Entkopplungsstellung, in welcher ein manuelles Schalten des Gleichspannungsschalters (3) zwischen der Schließstellung und der Offenstellung verhindert wird, überführbar ist.

6. Elektrisches System (1) nach einem der Ansprüche 1 bis 5, **dadurch gekennzeichnet, dass** der Gleichspannungsschalter (3) zumindest einen elektrischen Antriebsmotor (12) aufweist, der dazu eingerichtet ist, den Gleichspannungsschalter (3) zwischen der Schließstellung und der Offenstellung zu überführen.

7. Elektrisches System (1) nach Anspruch 6, **dadurch gekennzeichnet, dass** die Steuerungseinrichtung (11) dazu eingerichtet ist, einen Motorstrom (I_motor) und/oder eine Motorspannung (U_motor) des elektrischen Antriebsmotors (12) zu erfassen und auf Basis des Motorstroms (I_motor) und/oder der Motorspannung (U_motor) eine Schaltstellung des Gleichspannungsschalters (3) zu detektieren und/oder einen Defekt des Gleichspannungsschalters (3) festzustellen.

8. Elektrisches System (1) nach einem der Ansprüche 1 bis 7, **dadurch gekennzeichnet, dass** die Steuerungseinrichtung (11) eine Fehlererkennungseinheit (33) zur Erkennung von Fehlerzuständen des Wechselrichters (2), des Gleichspannungsschalters (3) und/oder des zumindest einen Photovoltaikmoduls (9) aufweist und die Steuerungseinrichtung (11) dazu eingerichtet ist, den Gleichspannungsschalter (3) in die Offenstellung zu schalten, wenn die Fehlererkennungseinheit (33) einen Fehlerzustand erkannt hat.

9. Elektrisches System (1) nach einem der Ansprüche 1 bis 8, **dadurch gekennzeichnet, dass** der Wechselrichter (2) ein Wechselrichtergehäuse (34) aufweist und der Gleichspannungsschalter (3) zumindest teilweise, vorzugsweise vollständig, innerhalb des Wechselrichtergehäuses (34) angeordnet ist.

10. Elektrisches System (1) nach einem der Ansprüche 1 bis 9, **dadurch gekennzeichnet, dass** der Wechselrichter (2) mit einem entfernten Server (32) verbindbar ist und die Steuerungseinrichtung (11) dazu eingerichtet ist, Befehle von dem Server (32) zu empfangen, um den Gleichspannungsschalter (3) zu schalten.

11. Verfahren zum Betreiben eines elektrischen Systems (1) zur Verbindung zumindest eines Photovoltaikmoduls (9) mit einem Energieversorgungsnetz (7) gemäß einem der Ansprüche 1 bis 10, wobei der Gleichspannungsschalter (3) mit dem Wechselrichter (2) über die elektrische Verbindungsleitung (4) sowie über die Ansteuerungsverbindung (10) verbunden ist und wobei der Gleichspannungsschalter (3) mit dem zumindest einen Photovoltaikmodul (9) über eine weitere elektrische Verbindungsleitung (52) verbunden ist,
wobei der Gleichspannungsschalter (3) durch die Steuerungseinrichtung (11) von der Offenstellung in die Schließstellung geschaltet wird, um das zumindest eine Photovoltaikmodul (9) mit dem Energieversorgungsnetz (7) elektrisch zu verbinden und/oder
wobei der Gleichspannungsschalter (3) durch die Steuerungseinrichtung (11) von der Schließstellung in die Offenstellung geschaltet wird, um das zumindest eine Photovoltaikmodul (9) von dem Energieversorgungsnetz (7) elektrisch zu trennen.

12. Verfahren nach Anspruch 11, **dadurch gekennzeichnet, dass** der Wechselrichter (2) mit einem Server (32) verbunden ist und der Gleichspannungsschalter (3) mittels einer Fernschaltung über den Server (32) zwischen der Schließstellung und der Offenstellung geschaltet wird.

13. Verfahren nach Anspruch 11 oder 12, **dadurch gekennzeichnet, dass** nach Erkennung eines Fehlerzustands der Gleichspannungsschalter (3) durch den Wechselrichter (2) über die Ansteuerungsverbindung (10) in die Offenstellung überführt wird.

14. Verfahren nach Anspruch 13, **dadurch gekennzeichnet, dass** der Fehlerzustand eines der folgenden ist:
- ein Fehlerzustand des Wechselrichters (2), beispielsweise ein Defekt eines Zwischenkreises;
- ein Fehlerzustand des Gleichspannungsschalters (3), beispielsweise eine mechanische Blockade insbesondere eine Blockade eines Rastwerks (13) oder eines Schaltmoduls (14); und/oder
- Fehlerzustand des Photovoltaikmoduls (9), beispielsweise eine Abschattung.
